# EUROPEAN PATENT APPLICATION

(11) **EP 4 814 901 A1**
(43) Date of publication of application: **30.09.2026**
(21) Application number: 26165845.4
(22) Date of filing: 18.03.2026
(51) Int. Cl.: G06V 20/58, G06V 20/62, G06V 30/19

(54) **VEHICLE ALERT RESPONSE SYSTEM USING CHARACTER RECOGNITION**

(30) Priority: 24.03.2025 US 202519088832
(71) Applicant: Avago Technologies International Sales Pte. Limited, Singapore 768923 (SG)
(72) Inventor: Fratti, Roger A., Mohnton, 19540 (US)
(74) Representative: Dilg, Haeusler, Schindelmann Patentanwaltsgesellschaft mbH

(57) **Abstract**

A vehicle alert response system of a vehicle is configured to handle an alert to identify a vehicle of interest, by performing the steps of: detecting the alert using a communication interface, the alert including a target license plate number of the vehicle of interest; capturing, using a video camera, video data showing a captured license plate number; identifying the captured license plate number by performing optical character recognition (OCR) to extract characters of the captured license plate number from pixels of the video data and decode the extracted characters; comparing the target license plate number to the captured license plate number to determine that the target license plate number matches the captured license plate number; and transmitting, using the communication interface, a response to the alert including the location information and indicating that the target license plate number has been identified from the video data.

## Description

### Background

Alerts are often issued to the public to notify the public about vehicles of interest. For example, such vehicles may have been reported as stolen, may be involved in a missing person case, may be associated with a suspect of a crime who is attempting to evade capture, etc. Such alerts may be issued, e.g., by being posted on billboards on the sides of major roadways in affected areas or by being transmitted to cellular phones in affected areas. However, there are various limitations to such alerts and the handling thereof. For example, only a small percentage of people who receive such alerts may actively search for the vehicles of interest. As another example, if the alerts are posted on one or more billboards, depending on where those billboards are located, many vehicles may enter and exit the roadways without even passing by the billboards when the alerts are posted. Accordingly, an improved system is desired for handling such alerts.

### Summary

One or more embodiments provide a vehicle alert response system of a vehicle, comprising a communication interface, a video camera system including a video camera, and one or more processors and memory. The one or more processors execute instructions stored in the memory to handle an alert to identify a vehicle of interest, by performing the following steps: detecting the alert using the communication interface, the alert including a target license plate number of the vehicle of interest; capturing, using the video camera, video data showing a captured license plate number; identifying the captured license plate number by performing optical character recognition (OCR) to extract characters of the captured license plate number from pixels of the video data and decode the extracted characters; comparing the target license plate number to the captured license plate number to determine that the target license plate number matches the captured license plate number; determining location information identifying a location of the vehicle; and transmitting, using the communication interface, a response to the alert including the location information and indicating that the target license plate number has been identified from the video data.

Further embodiments include a method comprising the above steps and one or more non-transitory computer-readable storage media comprising instructions that cause one or more devices of the vehicle alert response system to carry out the above steps.

### Brief Description of the Drawings

Figure 1 is a block diagram of a vehicle alert response system in which embodiments may be implemented.
Figure 2 is a flow diagram of a method that may be performed by a communication interface and video camera system of the vehicle alert response system to handle an alert to identify a vehicle of interest, according to some embodiments.
Figure 3 is a flow diagram of a method that may be performed by the video camera system to analyze video data captured by a video camera of the video camera system, according to some embodiments.

### Detailed Description

Techniques are described for handling alerts about vehicles of interest. According to techniques, a communication interface of a vehicle such as a long-term evolution (LTE) module detects an alert to identify a vehicle of interest. The alert includes a license plate number of the vehicle of interest, referred to herein as a "target license plate number." In response to the alert, a video camera system of the vehicle begins searching for the target license plate number. Such searching involves performing optical character recognition (OCR) on video data that is captured by a video camera of the video camera system. OCR is a process of detecting and extracting text from images such as from frames of video data. If the video camera system identifies a matching license plate number, the communication interface responds to the alert, indicating that the target license plate number has been located.

Embodiments solve several limitations existing with respect to current handling of alerts regarding vehicles of interest. Firstly, vehicles that are equipped with communication interfaces and video camera systems are becoming increasingly prevalent. For example, vehicles are increasingly being equipped with video cameras to enable driver assistance features such as lane departure warnings and forward collision warnings. Accordingly, an increasingly large number of vehicles in an affected area are equipped to detect the alerts and actively search for the vehicles of interest. Additionally, as long as vehicles in an affected area are within a communication range for receiving the alerts, they may receive the alerts using communication interfaces instead of needing, e.g., to pass by particular billboards at particular times. These and further aspects of the invention are discussed below with respect to the drawings.

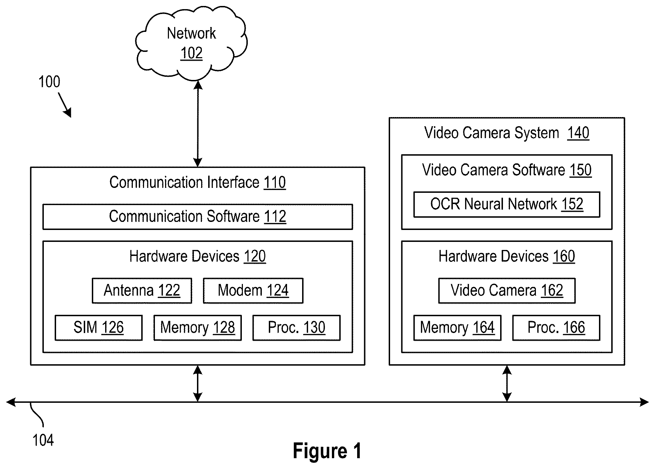

Figure 1 is a block diagram of a vehicle alert response system 100 in which embodiments may be implemented. Vehicle alert response system 100 is a computer system that includes a communication interface 110 and a video camera system 140. As used herein, a "communication interface" is a device that is configured to exchange data with other devices or systems over a network 102 such as an LTE network. A communication interface includes both hardware components for exchanging such data and software configured to perform such exchange according to protocols and standards such as rules for data formatting, synchronization, and error handling. Communication interface 110 includes hardware devices 120 such as an antenna 122, a modem 124, a subscriber identity module (SIM) card 126, memory 128 such as flash memory and random-access memory (RAM), and a processor 130 such as a baseband processor.

Antenna 122 is a device that transmits and receives electromagnetic signals over networks such as network 102. Modem 124 is a device that converts and decodes signals received by antenna 122 and that encodes and converts signals to be transmitted by antenna 122, as discussed further below. Processor 130 is configured to execute instructions such as executable instructions that perform one or more operations described herein, which may be stored in memory 128. Hardware devices 120 support communication software 112. Communication software 112 is software programmed to manage the operation and functionality of communication interface 110 such as establishing and maintaining connections to network 102. It should be noted that although hardware devices 120 are illustrated as including SIM card 126, communication interface 110 may include a built-in embedded SIM (eSIM) card.

As used herein, a "video camera system" includes both a video camera and software that interfaces with the video camera to process video data captured thereby. For example, video camera system 140 may include a single device or may include a plurality of devices. Video camera system 140 includes hardware devices 160 such as a video camera 162, memory 164 such as flash memory and RAM, and processor 166 such as a central processing unit (CPU).

Video camera 162 is a device that captures moving images and converts those moving images into video data, i.e., into sequences of frames. For example, video camera 162 may be "front-facing," i.e., may capture video data based on objects ahead of a vehicle that is equipped with vehicle alert response system 100. As another example, video camera 162 may be "rear-facing," i.e., may capture video data based on objects behind the vehicle. As another example, video camera 162 may be a "side camera," i.e., may capture video data based on objects in a blind spot of the vehicle, either to the left or to the right of the vehicle. It should be noted that hardware devices 160 may include a combination of such video cameras.

Processor 166 is configured to execute instructions such as executable instructions that perform one or more operations described herein, which may be stored in memory 164. Hardware devices 160 support video camera software 150. Video camera software 150 is software that is programmed to interface with video camera 162 and to process video data captured thereby. Such processing includes performing OCR on such video data. For example, video camera software 150 may include an OCR neural network 152 for performing such OCR. OCR neural network 152 is an artificial neural network that is trained to perform OCR on video data.

An artificial neural network is a machine-learning model consisting of interconnected layers of nodes, referred to as "neurons." A neuron is a fundamental unit or component of an artificial neural network. Neurons in an artificial neural network work together to process input data, transform it through layers of computation, and produce an output. Although video camera software 150 is illustrated as including OCR neural network 152, video camera software 150 may instead include one or more software components (not shown) that are configured to perform OCR without relying on artificial neural networks. Communication interface 110 and video camera system 140 may communicate with each other over an internal network 104 such as an Ethernet network.

Although not illustrated in Figure 1, hardware devices 160 may further include an XPU such as for execution of OCR neural network 152. As used herein, an "XPU" includes any type of hardware accelerator, including a graphics processing unit (GPU), tensor processing unit (TPU), neural processing unit (NPU), field-programmable gate array (FPGA), or application-specific integrated circuit (ASIC). Some XPUs, referred to herein as "specific purpose XPUs," are hardware that is fixed in functionality at the time of manufacture. Examples of specific purpose XPUs include ASICs. Other XPUs, referred to herein as "general purpose XPUs," are hardware that can be programmed at the software level after manufacture to implement specific functions. Examples of general purpose XPUs include GPUs. Other XPUs, referred to herein as "programmable logic devices" (PLDs), are hardware that can be programmed at the hardware level after manufacture to perform specific functions. Examples of PLDs include FPGAs.

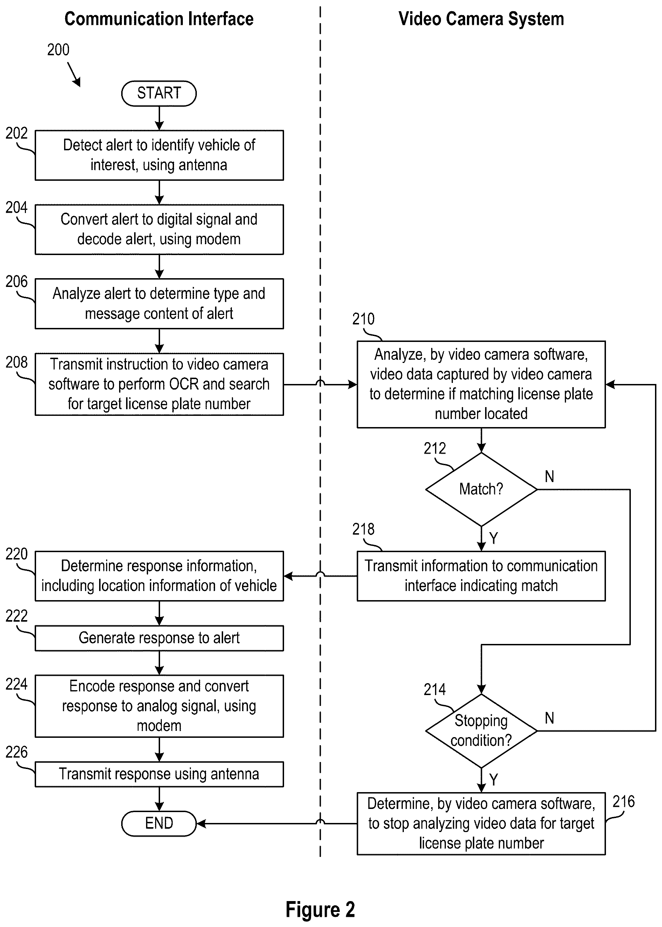

Figure 2 is a flow diagram of a method 200 that may be performed by communication interface 110 and video camera system 140 to handle an alert to identify a vehicle of interest, according to some embodiments. At step 202, communication interface 110 uses antenna 122 to detect an alert to identify a vehicle of interest. For example, communication interface 110 may detect the alert from network 102, and the alert may originate from a public safety alert system. At step 204, communication interface 110 uses modem 124 to convert the alert from an analog signal to a digital signal and to decode the alert. Such decoding is a process of extracting original data from the alert as accurately as possible, including, e.g., performing error correction such as forward error correction (FEC) on the converted alert.

At step 206, communication interface 110 analyzes the alert to determine a type of the alert and message content of the alert. The type of the alert indicates to search for the vehicle of interest, e.g., because it is involved in a missing person case. The message content of the alert includes information such as a target license plate number of the vehicle of interest and a make and model thereof. At step 208, communication interface 110 transmits an instruction to video camera software 150 to perform OCR and search for the target license plate number. For example, communication interface 110 may transmit the instruction over network 104.

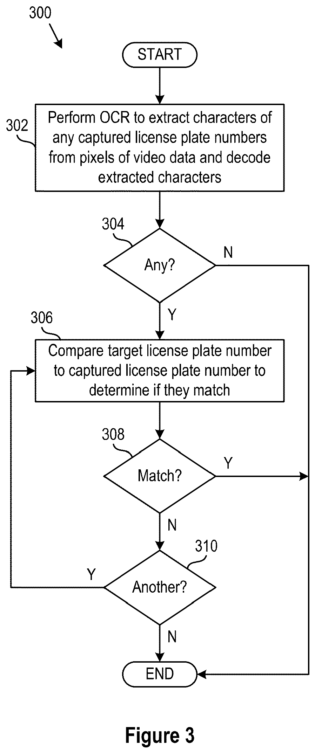

At step 210, video camera software 150 begins performing a routine to analyze video data captured by video camera 162 to determine if a license plate number matching the target license plate number has been located. In other words, the routine determines if the video data includes the target license plate number. Such analysis is discussed further below in conjunction with Figure 3. At step 212, if video camera software 150 determines that there is no match, method 200 moves to step 214.

At step 214, video camera software 150 determines if it has reached a stopping condition associated with searching for the target license plate number. As one example, a stopping condition may be a timeout period, e.g., a predetermined amount of time elapsing since video camera software 150 began performing the routine to analyze the video data, without locating the target license plate number. As another example, a stopping condition may be stopping of an engine or motor of the vehicle equipped with vehicle alert response system 100. If a stopping condition has been reached, method 200 moves to step 216.

At step 216, video camera software 150 determines to stop analyzing the video data for the target license plate number, and method 200 ends. Returning to step 214, if a stopping condition has not been reached, method 200 returns to step 210, and video camera software 150 analyzes more video data for the target license plate number. Video camera software 150 may perform 210-214 repeatedly as long as the target license plate number has not been located and a stopping condition has not been reached. Returning to step 212, if video camera software 150 determines that there is a match, method 200 moves to step 218.

At step 218, video camera system 140 transmits information to communication interface 110 indicating the match between a license plate number in the video data and the target license plate number. At step 220, communication interface 110 determines response information to include in a response to the alert, including location information of the vehicle equipped with vehicle alert response system 100. For example, GPS coordinates may be determined as the location information by a GPS receiver of the vehicle. The GPS receiver may transmit the GPS coordinates to communication interface 110. The response information may further include other information such as a SIM number of a SIM card of communication interface 110 (e.g., SIM card 126 or an eSIM card). On the other hand, to preserve the privacy of the vehicle equipped with vehicle alert response system 100, the SIM number may be excluded from the response information. At step 222, communication interface 110 generates a response to the alert indicating that the target license plate number has been identified from the video data. Communication interface 110 includes the response information in the response.

At step 224, communication interface 110 uses modem 124 to encode the response and convert the response from a digital signal to an analog signal. Such encoding enables the response to be transmitted reliably over network 102, including, e.g., applying error correction codes to the response so that the receiver can correct any errors that occur during transmission. At step 226, communication interface 110 uses antenna 122 to transmit the response. For example, communication interface 110 may transmit the response to a public safety alert system via network 102. After step 226, method 200 ends. It should be noted that when video camera software 150 determines that there is a match at step 212, video camera software 150 may determine to stop analyzing the video data for a matching license plate number. In other words, determining that there is a match may be a stopping condition with respect to searching for the target license plate number.

Although method 200 has been discussed with respect to analyzing video data captured only by video camera 162, embodiments are not limited as such. As mentioned earlier, hardware devices 160 may include a plurality of video cameras such as a front-facing camera, a rear-facing camera, and side cameras. Video camera software 150 may analyze video data captured by each of such video cameras to determine if a matching license plate number is located. If a match is determined based on the video data captured by any of such video cameras, steps 218-226 may be performed.

Figure 3 is a flow diagram of a method 300 that may be performed by video camera system 140 to analyze video data captured by video camera 162, according to some embodiments. At step 302, video camera software 150 performs OCR to extract characters of license plate numbers from pixels of video data captured by video camera 162 and decode the extracted characters. Such license plate numbers captured by video camera 162 are referred to herein as "captured license plate numbers." The "extracting" of characters refers to identifying and isolating visual information in the pixels of individual characters or groups of characters, which involves, e.g., detecting shapes, lines, and patterns. The "decoding" of characters refers to interpreting the visual information to identify the characters.

According to some embodiments, video camera software 150 applies one or more neural networks such as OCR neural network 152 to perform the OCR. For example, OCR neural network 152 may perform operations at neurons of its layers based on the video data to extract the characters of any captured license plate numbers from the pixels of the video data and decode the extracted characters. According to other embodiments, video camera software 150 may use other software components for performing the OCR without relying on artificial neural networks. For example, such other software components may extract characters from the video data and compare the extracted characters to a template library that includes images of characters, to interpret the extracted characters.

At step 304, if there were no captured license plate numbers, method 300 ends, and video camera software 150 determines that there are no matches, i.e., that the video data does not include a target license plate number. Otherwise, if there was at least one captured license plate number, method 300 moves to step 306. At step 306, video camera software 150 compares the target license plate number to a captured license plate number to determine if they match. At step 308 if they match, method 300 ends, and video camera software 150 determines that there is a match, i.e., that the video data includes the target license plate number.

Otherwise, if they do not match, method 300 moves to step 310. At step 310, if there is another captured license plate number to analyze, method 300 returns to step 306, and video camera software 150 compares the target license plate number to a next captured license plate number to determine if they match. Video camera software 150 may thus iterate over a plurality of captured license plate numbers to determine if any of them match the target license plate number. Returning to step 310, if a match has not been found and there are no more captured license plate numbers to analyze, method 300 ends, and video camera software 150 determines that there are no matches.

It should be noted that at step 302, if video camera software 150 successfully extracts characters from one or more captured license plate numbers, video camera software 150 may store those characters, e.g., in memory 164. To preserve the privacy of the captured license plate numbers, video camera software 150 may encrypt those characters before storing them. Video camera software 150 may then decrypt those characters when performing comparisons at one or more iterations of step 306. After method 300 ends, video camera software 150 may then delete those characters. It should also be noted that although method 300 has been discussed with respect to performing OCR only on video data captured by video camera 162, embodiments are not limited as such. Steps of method 300 may be performed on video data captured by a plurality of video cameras, including, e.g., a front-facing camera, a rear-facing camera, and side cameras.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, solid-state drives (SSDs), network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A method of handling an alert to identify a vehicle of interest, the method comprising:
detecting the alert using a communication interface, wherein the alert includes a target license plate number of the vehicle of interest;
capturing, using a video camera, video data showing a captured license plate number;
identifying the captured license plate number by performing optical character recognition, OCR, to extract characters of the captured license plate number from pixels of the video data and decode the extracted characters;
comparing the target license plate number to the captured license plate number to determine that the target license plate number matches the captured license plate number;
determining location information identifying a location of a vehicle; and
transmitting, using the communication interface, a response to the alert including the location information and indicating that the target license plate number has been identified from the video data.

2. The method of claim 1, further comprising:
transmitting, by the communication interface to a video camera software, an instruction to perform the OCR and search for the target license plate number, wherein the video camera software performs the OCR in response to receiving the instruction to perform the OCR and search for the target license plate number.

3. The method of claim 2, further comprising:
determining to stop performing the OCR by the video camera software in response to reaching a stopping condition associated with searching for the target license plate number.

4. The method of any one of the claims 1 to 3, further comprising:
transmitting, by a video camera system including the video camera, to the communication interface, information indicating that the target license plate number matches the captured license plate number.

5. The method of any one of the claims 1 to 4, wherein performing the OCR includes:
applying a neural network that performs operations at neurons of its layers based on the video data to extract the characters of the captured license plate number from the pixels of the video data and decode the extracted characters.

6. The method of any one of the claims 1 to 5, wherein decoding the extracted characters includes:
comparing the extracted characters to a template library that includes images of characters.

7. The method of any one of the claims 1 to 6, further comprising:
determining a subscriber identity module (SIM) number of a SIM card of the cellular communication module, wherein the response to the alert includes the SIM number.

8. A vehicle alert response system of a vehicle, comprising:
a communication interface;
a video camera system including a video camera; and
one or more processors and memory, wherein the one or more processors execute instructions stored in the memory to handle an alert to identify a vehicle of interest, by performing a method as set forth in any one of the preceding claims.

9. The vehicle alert response system of claim 8, wherein
the video camera system further includes video camera software that is programmed to perform the OCR.

10. One or more non-transitory, computer-readable media comprising instructions that are executable in one or more devices of a vehicle alert response system, wherein the instructions when executed cause the one or more devices to carry out a method as set forth in any one of the preceding method claims.
